# EUROPEAN PATENT APPLICATION

(11) **EP 3 819 864 A1**
(43) Date of publication of application: **12.05.2021**
(21) Application number: 19830090.7
(22) Date of filing: 09.05.2019
(51) Int. Cl.: G06T 7/00

(54) **TARGET OBJECT DETECTION PROGRAM AND TARGET OBJECT DETECTION DEVICE**

(30) Priority: 02.07.2018 JP 2018126305
(71) Applicant: KONICA MINOLTA, INC., Tokyo 100-7015 (JP)
(72) Inventor: OKAZAKI, Tomoya, Tokyo 100-7015 (JP)
(74) Representative: Gille Hrabal Partnerschaftsgesellschaft mbB Patentanwälte
(86) International application number: PCT/JP2019/018629
(87) International publication number: WO 2020/008726

(57) **Abstract**

To provide a target object detection program that can reduce false detection of a target object due to variation in the target object with areas in a photographed image and can detect the target object at a high speed and with high accuracy.

A target object detection program that causes a computer to perform processing including: a procedure (a) of acquiring an image that is photographed; a procedure (b) of generating a feature map from the image which is acquired; and a procedure (c) of detecting a target object from the feature map in each of divisional areas by using the dictionary corresponding to the divisional area, based on area-by-area estimation parameters to which the divisional areas resulting from division of the image into a plurality of areas and dictionaries corresponding to the divisional areas, respectively for detecting a target object are set.

## Description

### Technical Field

The present invention relates to a target object detection program and a target object detection apparatus.

### Background Art

In our country, the postwar rapid economic growth has brought about improvement in living standards, improvement in hygienic environments, an increase of a level of medical treatment, and the like, thereby an increase in longevity has become remarkable. The increase in longevity, in combination with reduction of the birth rate, creates an aging society with a high population of the elderly. In such an aging society, there is expected an increase in the number of cared persons or the like who need to be cared or the like due to diseases, injuries, aging, and the like.

Cared persons or the like are likely to fall during walking or tumble from beds in facilities such as hospitals or old person's welfare, resulting in injuries. Thus, in order for a staff such as a caregiver and a nurse to readily run to a cared person or the like who is placed in the foregoing conditions, development of a system for detecting conditions of cared persons or the like from a photographed image has been advanced. To detect the conditions of the cared person or the like using such a system, it is required to detect a target object (target person or the like) to be detected, from the photographed image with high accuracy.

In connection with such a technique of detecting the target object from the photographed image, Patent Document 1 noted below discloses the following technique. A plurality of images is formed by rotations, each at a predetermined angle interval, of a fisheye image photographed by a fisheye lens camera, and the plurality of images showing conditions before and after the rotations is compared with an image of a target object to be detected, the image being previously stored in a database, thereby detecting the target object. In this manner, the target object can be detected with high accuracy from the fisheye image in which distortion increases toward the periphery from the center of the image.

Patent Document 2 noted below discloses the following technique. A feature map is generated from a photographed image using a deep neural network. Based on the feature map, a candidate rectangle that is an area where an object is estimated to be present is detected. Then, respective reliability scores of object categories are calculated in each candidate rectangle, thereby detect the target object. By calculating both of the candidate rectangle and reliability scores using a single feature map generated from the whole of the photographed image, it is possible to detect the target object with high accuracy and at a high speed.

### Prior Art Documents

### Patent Documents

Patent Document 1: JP 2012-230546 A
Patent Document 2: US 2017/0,206,431 A

### Summary of Invention

### Technical Problem

However, the technique disclosed in Patent Document 1 requires formation of a plurality of images that is formed by rotations of the fisheye image to be input. Therefore, a detecting process is required to be performed plural times for the plurality of images, respectively, which causes a problem of an increase in a processing time. With regard to the technique disclosed in Patent Document 2, in a case of detecting a target object from an image having relatively large distortion like the fisheye image, there is caused a problem of possible false detection of the target object due to the distortion of the image.

The present invention has been made to solve the above-described problems. Specifically, it is an object of the invention to provide a target object detection program and a target object detection apparatus that can reduce false detection of the target object due to variation in the object with areas in the photographed image and can detect the target object at a high speed and with high accuracy.

### Solution to Problem

The above-described problems associated with the present invention are solved by the following solutions.
(1) A target object detection program that causes a computer to perform processing including: a procedure (a) of acquiring an image that is photographed; a procedure (b) of generating a feature map from the image acquired in the procedure (a); and a procedure (c) of detecting a target object from the feature map in each of divisional areas by using the dictionary corresponding to the divisional area, based on area-by-area estimation parameters to which the divisional areas resulting from division of the image into a plurality of areas and dictionaries corresponding to the divisional areas respectively for detecting a target object are set.
(2) The target object detection program according to the above (1), wherein the image is a wide-angle image, and the divisional areas are set in accordance with a degree of distortion varying with positions on the image.
(3) The target object detection program according to the above (1), wherein the image is an image in which a ratio between a size of an object on the image and an actual size of the object varies with a distance from a camera that photographs the image to the object in a photographing direction, and the divisional areas are determined in accordance with the ratio.
(4) The target object detection program according to any of above (1) to (3), wherein in the procedure (c), based on the area-by-area estimation parameters, respective reliability scores of predetermined object categories are calculated in each of the divisional areas by using the dictionary corresponding to the divisional area, thereby detecting the target object.
(5) The target object detection program according to any of the above (1) to (3), wherein the procedure (c) includes: a procedure (c1) of, based on the area-by-area estimation parameters, detecting an object from the feature map in each of the divisional areas by using the dictionary corresponding to the divisional area; and a procedure (c2) of calculating respective reliability scores of predetermined categories for each of the objects detected in the procedure (c1), so as to detect the target object from the objects.
(6) The target object detection program according to any of the above (1) to (3), wherein in the procedure (c), an amount of positional shift and an amount of scale shift of a reference rectangle set in the image with respect to a rectangular area where an object is present are estimated in each of the divisional areas by using the feature map and the dictionary, the amount of positional shift and the amount of scale shift are minimized to detect a candidate rectangle including the object, respective reliability scores of predetermined categories are calculated for the object included in the candidate rectangle, and the candidate rectangle in which a category having the highest reliability score is a category of the target object is output as an output rectangle including the target object, thereby detecting the target object, and a shape of the reference rectangle varies with the divisional areas.
(7) The target object detection program according to the above (2), wherein in the procedure (c), based on distortion characteristics of a lens of a camera photographing the wide-angle image, the area-by-area estimation parameters used for detecting the target object are switched to the area-by-area estimation parameters to which the divisional areas are set in accordance with the distortion characteristics of the lens.
(8) The target object detection program according to the above (2), wherein in the procedure (c), based on an installation height of a camera photographing the wide-angle image, the area-by-area estimation parameters used for detecting the target object are switched to the area-by-area estimation parameters to which the divisional areas in accordance with the installation height of the camera are set.
(9) The target object detection program according to the above (3), wherein in the procedure (c), based on an extent of a photographing range of the image, the area-by-area estimation parameters used for detecting the target object are switched to the area-by-area estimation parameters to which the divisional areas in accordance with the extent of the photographing range are set.
(10) A target object detection apparatus including: an acquisition unit configured to acquire an image that is photographed; a feature-map generation unit configured to generate a feature map from the image that is acquired; and a detection unit configured to detect a target object from a feature map in each of the divisional areas by using the dictionary corresponding to the divisional area, based on area-by-area estimation parameters to which the divisional areas resulting from division of the image into a plurality of areas and dictionaries corresponding to the divisional areas respectively for detecting a target object are set.
(11) The target object detection apparatus according to the above (10), wherein the image is a wide-angle image, and the divisional areas are set in accordance with a degree of distortion varying with positions on the image.
(12) The target object detection apparatus according to the above (10), wherein the image is an image in which a ratio between a size of an object on the image and an actual size of the object varies with a distance from a camera that photographs the image to the object in a photographing direction, and the divisional areas are set in accordance with the ratio.
(13) The target object detection apparatus according to any of the above (10) to (12), wherein the detection unit, based on the area-by-area estimation parameters, calculates respective reliability scores of predetermined object categories in each of the divisional areas by using the dictionary corresponding to the divisional area, thereby detecting the target object.
(14) The target object detection apparatus according to any of the above (10) to (12), wherein the detection unit includes: an object detector configured to, based on the area-by-area estimation parameters, detect an object from the feature map in each of the divisional areas by using the dictionary corresponding to the divisional area; and a target object detector configured to calculate respective reliability scores of predetermined categories for each of the objects detected by the object detector, so as to detect the target object from the objects.
(15) The target object detection apparatus according to any of the above (10) to (12), wherein the detection unit estimates an amount of positional shift and an amount of scale shift of a reference rectangle set in the image with respect to a rectangular area where an object is present, in each of the divisional areas by using the feature map and the dictionary, minimizes the amount of positional shift and the amount of scale shift to detect a candidate rectangle including the object, calculates respective reliability scores of predetermined categories for the object included in the candidate rectangle, and outputs the candidate rectangle in which a category having the highest reliability score is a category of the target object as an output rectangle including the target object, thereby detecting the target object, and a shape of the reference rectangle varies with the divisional areas.
(16) The target object detection apparatus according to the above (11), wherein the detection unit, based on distortion characteristics of a lens of a camera photographing the wide-angle image, switches the area-by-area estimation parameters used for detecting the target object to the area-by-area estimation parameters to which the divisional areas are set in accordance with the distortion characteristics of the lens.
(17) The target object detection apparatus according to the above (11), wherein the detection unit, based on an installation height of a camera photographing the wide-angle image, switches the area-by-area estimation parameters used for detecting the target object to the area-by-area estimation parameters to which the divisional areas in accordance with the installation height of the camera are set.
(18) The target object detection apparatus according to the above (12), wherein the detection unit, based on an extent of a photographing range of the image, switches the area-by-area estimation parameters used for detecting the target object to the area-by-area estimation parameters to which the divisional areas in accordance with the extent of the photographing range are set.

### Advantageous Effects of Invention

In each of divisional areas resulting from division of a photographed image, a target object is detected from a feature map generated from the photographed image by using a dictionary corresponding to the divisional area. This can reduce false detection of a target object due to variation in the object with areas in a photographed image and can detect the target object at a high speed and with high accuracy.

### Brief Description of Drawings

Fig. 1 is a view schematically illustrating a configuration of a target object detection system.
Fig. 2A is an explanatory view illustrating a wide-angle image photographed by a wide-angle camera.
Fig. 2B is an explanatory view illustrating a wide-range photographed image photographed by a wide-range photographing camera.
Fig. 3 is a block diagram illustrating a hardware configuration of a target object detection apparatus.
Fig. 4A is a view illustrating an example of divisional areas.
Fig. 4B is a view illustrating another example of divisional areas.
Fig. 5 is a block diagram illustrating functions of a control unit of the target object detection apparatus.
Fig. 6 is an explanatory view for explaining a method of detecting a candidate rectangle based on a feature map.
Fig. 7 is an explanatory view for explaining an example of candidate rectangles.
Fig. 8 is a view illustrating an example of an output rectangle output as a detection result of a target person.
Fig. 9 is an explanatory view illustrating an example of estimated joints.
Fig. 10 is a flowchart illustrating operations of the target object detection apparatus.

### Description of Embodiments

Hereinafter, a target object detection program and a target object detection apparatus according to an embodiment of the present invention will be described with reference to the drawings. Note that in the drawings, the same elements are denoted by the same reference signs, and duplicated description is omitted. Further, dimension ratios in the drawings are exaggerated for the sake of convenience in explanation and may be different from actual dimension ratios.

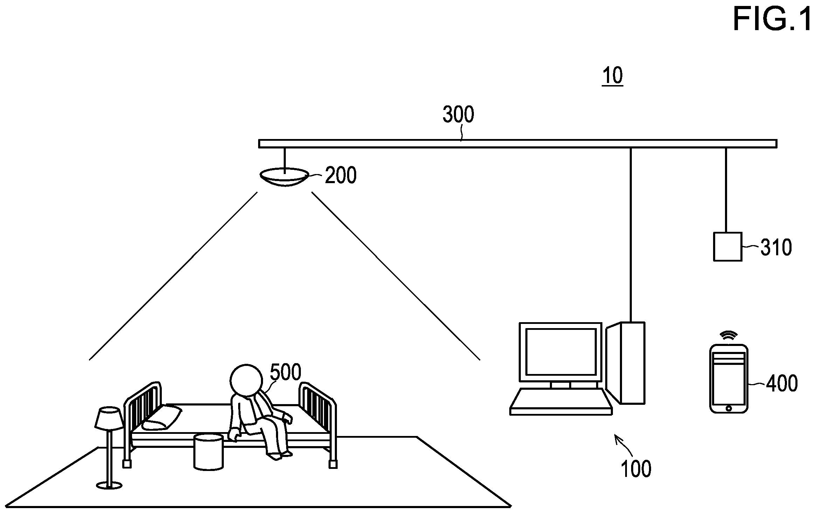

Fig. 1 is a view schematically illustrating a configuration of a target object detection system including the target object detection apparatus according to the embodiment.

The target object detection system 10 includes the target object detection apparatus 100, a photographing apparatus 200, a communication network 300, and a mobile terminal 400. The target object detection apparatus 100 is connected with the photographing apparatus 200 and the mobile terminal 400 via the communication network 300 so as to be communicatable with each other. In the present specification, a target object means an object to be detected by the target object detection apparatus 100. A target object can include a plurality of categories. Categories are kinds of objects that can be recognized by the target object detection apparatus 100 and include a person, a bed, a desk, a chair, a walker, and the like. Categories include kinds of objects other than the target object. Hereinafter, the description will be made on the assumption that the target object is a target person 50 (i.e., a human being).

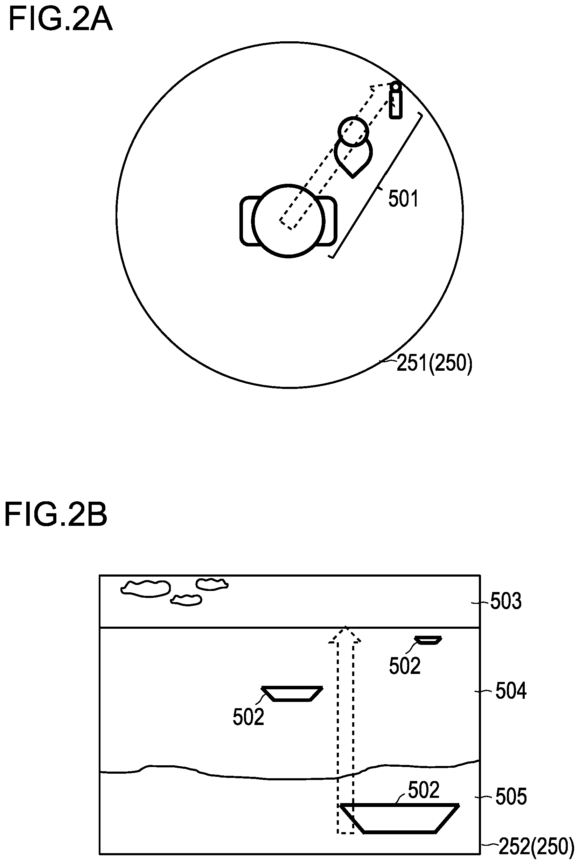

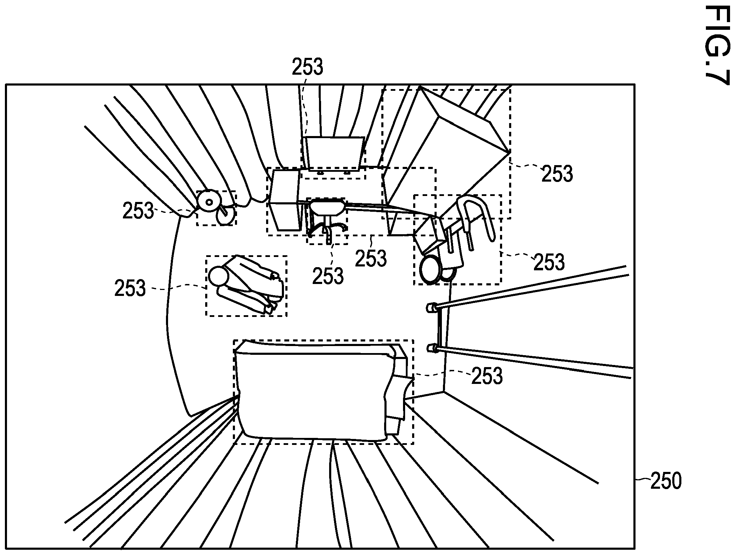

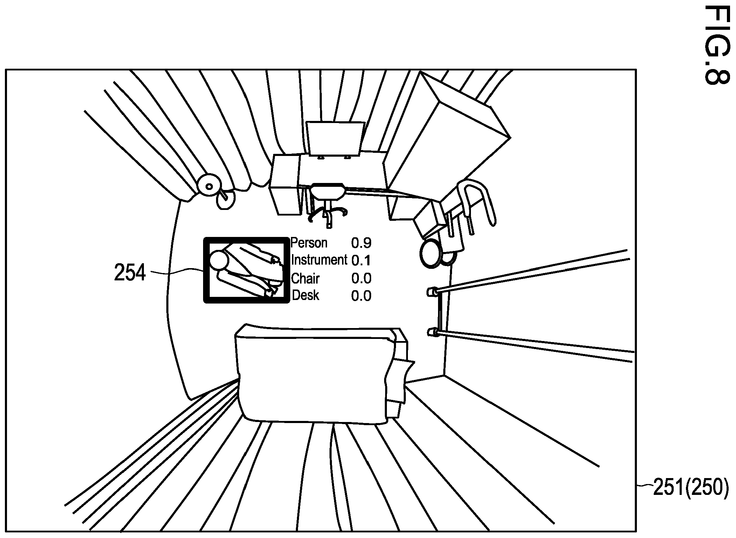

The target object detection apparatus 100 receives an image photographed by the photographing apparatus 200 (hereinafter simply referred to as a "photographed image 250", (refer to Figs. 2A, 2B, and the like)) from the photographing apparatus 200 and detects the target person 500 included in the photographed image 250 as the target object. As described later, the target object detection apparatus 100 detects areas in each of which an object is present on the photographed image 250 and estimates the categories of the objects included in the detected areas, thereby detecting the target person 500. Each area in which an object is present is detected in the form of a rectangle including the object on the photographed image 250 (this rectangle will be hereinafter referred to as a "candidate rectangle 253", (refer to Fig. 7)). Among the detected candidate rectangles 253, the candidate rectangle 253 including an object of which category is estimated to be the person (this candidate rectangle 253 will hereinafter be referred to as an "output rectangle 254", (refer to Fig. 8)) is detected, thereby detecting the target person 500. Additionally, the target object detection apparatus 100 can further detect a posture and a behavior of the target person 500 based on the output rectangle 254. Further, the target object detection apparatus 100 can detect an event related to the target person 500 based on an estimated behavior. The event means a change in the conditions of the target person 70 recognized by the target object detection apparatus 100 or the like. The event is an incident that a staff 80 needs to be notified (informed) of, such as rising, bed leaving, falling, irregularity in slight body movement, and the like, for example. When the event is detected, the target object detection apparatus 100 transmits a notice of event stating the contents of the event to the mobile terminal 400. The target object detection apparatus 100 can detect the target person 500 by using a deep neural network (hereinafter referred to as a "DNN"). As a method of detecting the target object by using the DNN, known methods such as Faster R-CNN, Fast R-CNN, and R-CNN are cited. Hereinafter, the description will be made on the assumption that the target object detection apparatus 100 detects the target object using Faster R-CNN. The target object detection apparatus 100 includes a computer. For example, the target object detection apparatus 100 can be formed as a server.

The photographing apparatus 200 includes a near-infrared camera, for example, and is installed in a predetermined position to photograph a photographed area that is viewed from above using the predetermined position as a sight point. More specifically, the photographing apparatus 200 irradiates a photographed area with near-infrared rays using a LED (light emitting device) and receives reflected light formed of the near-infrared rays reflected by an object in the photographed area, by a CMOS (complementary metal oxide semiconductor) sensor, thereby photographing the photographed area. The photographed image 250 can be a monochrome image including pixels, each of which having the reflectivity of the near-infrared rays as its value. The predetermined position is a ceiling of a room of the target person 500, for example. The photographed area is a three-dimensional area including the whole of the floor of the room, for example. The photographing apparatus 200 can photograph the photographed area as a moving image at a frame rate of 15 fps to 30 fps, for example. The photographed image 250 includes the moving image and a still image. The photographing apparatus 200 transmits the photographed image 250 to the target object detection apparatus 100 and the like.

A camera forming the photographing apparatus 200 can be a wide-angle camera. The wide-angle camera is a camera that can photograph the photographed image 250 with a relatively wide angle of view, and is also a camera in which the degree of distortion varies with positions on the photographed image 250. A wide-angle camera includes a fisheye lens camera, for example.

On the other hand, the camera forming the photographing apparatus 200 can be a camera with an angle of view being widened by adjustment of an installation height or the like of the camera to photograph a relatively wide range as a photographing range (hereinafter referred to as a "wide-range photographing camera"). The wide-range photographing camera is a camera that photographs the photographed image 250 in which a ratio between a size of an object on the photographed image 250 and an actual size of the object varies with a distance from the camera to the object in a photographing direction. As the wide-range photographing camera, a general-purpose camera in which the degree of distortion is not varied with positions on the photographed image 250 can be used.

Fig. 2A is an explanatory view illustrating a wide-angle image photographed by the wide-angle camera. Fig. 2B is an explanatory view illustrating a wide-range photographed image photographed by the wide-range photographing camera.

Fig. 2A illustrates the wide-angle image 251 for a person 501 in a room photographed by the wide-angle camera. Note that in the wide-angle image 251, images of the same person 501 in three different positions are virtually shown as if they are photographed in the single wide-angle image 251 for the sake of simplicity in description. In the wide-angle image 251, distortion increases toward the periphery of the image from the center of the image as indicated by broken lines in Fig. 2A. Thus, the shape or the like of the same person 501 varies relatively greatly depending on whether the position of the person 501 on the wide-angle image 251 is near to or far from the center of the wide-angle image 251.

Fig. 2B illustrates the wide-range photographed image 252 for a ship 502 located on a sea 504 or a beach 505 that is photographed by the wide-range photographing camera so as to include a sky 503, the sea 504, and the beach 505. Note that in the wide-range photographed image 252, images of the same ship 502 in three different positions are virtually shown as if they are photographed in the single wide-range photographed image 252 for the sake of simplicity in description. In the example in Fig. 2B, a distance from the wide-range photographing camera to the ship 502 in a photographing direction increases from the bottom toward the top as indicated by broken lines in the wide-range photographed image 252. Thus, an on-image size of the same ship 502 decreases as a position of the ship 502 on the wide-range photographed image 252 moves upward in the wide-range photographed image 252. This means that in the wide-range photographed image 252, a ratio between an on-image size of an object and an actual size of the object varies with variation in a distance from a wide-angle photographing camera to the object in a photographing direction.

The photographing apparatus 200 can include a sensor box including a computer. The sensor box is a box-shaped apparatus including a near-infrared camera and a body motion sensor or the like. In this case, the sensor box can be configured so as to have a part or a whole of functions of the target object detection apparatus 100. The body motion sensor is a Doppler-shift sensor that transmits/receives microwaves to/from a bed and detects Doppler shift of microwaves generated by body motion (breathing, for example) of the target person 500.

As the communication network 300, a network interface complying with wire communication standards such as Ethernet (registered trademark) can be used. Alternatively, as the communication network 300, a network interface complying with wireless communication standards such as Bluetooth (registered trademark) or IEEE 802.11 may be used. The communication network 300 is provided with an access point 310, by which the mobile terminal 400 is connected communicatably with the target object detection apparatus 100 and the photographing apparatus 200 via a wireless communication network.

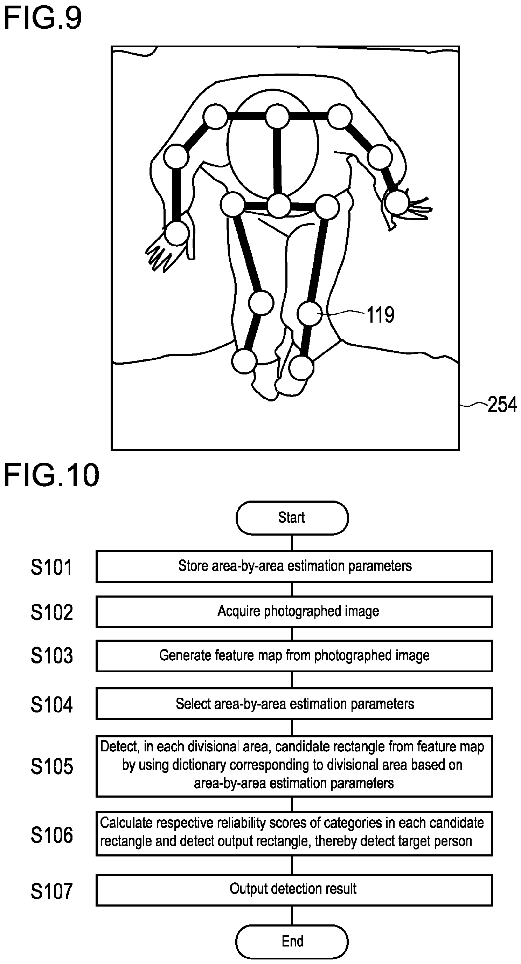

The mobile terminal 400 receives a notice of event from the target object detection apparatus 100 and displays contents of the notice of event. The mobile terminal 400 receives a detection result of the target person 500 detected by the target object detection apparatus 100 from the target object detection apparatus 100 and displays the detection result. More specifically, the mobile terminal 400 can display the detection result of the target person 500 by displaying the output rectangle 254 on the photographed image 250, for example. The mobile terminal 400 can receive detection results of a posture and a behavior of the target person 500 from the target object detection apparatus 100 and display the detection results. A detection result of posture includes an estimation result of joints 119 (refer to Fig. 9) of the target person 500 as will be described later. The detection result of behavior includes a detection result of behavior corresponding to an event such as rising, bed leaving, or irregularity in slight body movemtnt, and further includes a detection result of behavior such as entrance to the room, sleeping, or sitting. The detection result of behavior may be received while being included in the notice of event. The mobile terminal 400 can receive the photographed image 250 from the photographing apparatus 200 or the target object detection apparatus 100 and display the photographed image 250. The mobile terminal 400 includes a smartphone, for example.

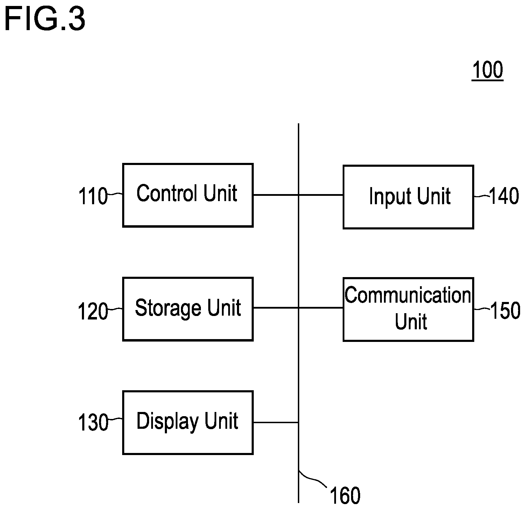

Fig. 3 is a block diagram illustrating a hardware configuration of the target object detection apparatus. The target object detection apparatus 100 includes a control unit 110, a storage unit 120, a display unit 130, an input unit 140, and a communication unit 150. Those components are connected with each other via a bus 160.

The control unit 110, which includes a CPU (central processing unit), controls the other components of the target object detection apparatus 100 and performs arithmetic processing in accordance with programs. Details of functions of the control unit 110 will be given later.

The storage unit 120 can include a RAM (random access memory), a ROM (read only memory), and an SSD (solid state drive). The RAM serving as a workspace of the control unit 110 temporally stores therein programs and data. The ROM previously stores various kinds of programs and various kinds of data. The SSD holds various kinds of programs and various kinds of data including an operating system.

The storage unit 120 stores therein area-by-area estimation parameters to which divisional areas resulting from division of the photographed image 250 into plural areas (hereinafter simply referred to as "divisional areas") and dictionaries corresponding to the divisional areas respectively, are set. Divisional areas can be determined by coordinates of pixels included in plural areas of the photographed image 250 having been divided, for example. Dictionaries are data that defines a weight given between nodes in respective layers of a DNN. Reflecting dictionaries in the DNN makes the DNN a learned model. In the present embodiment, in each of divisional areas, one of dictionaries corresponding to the divisional area is reflected in the DNN and the target person 500 is detected from a feature map (convolutional feature map) described later.

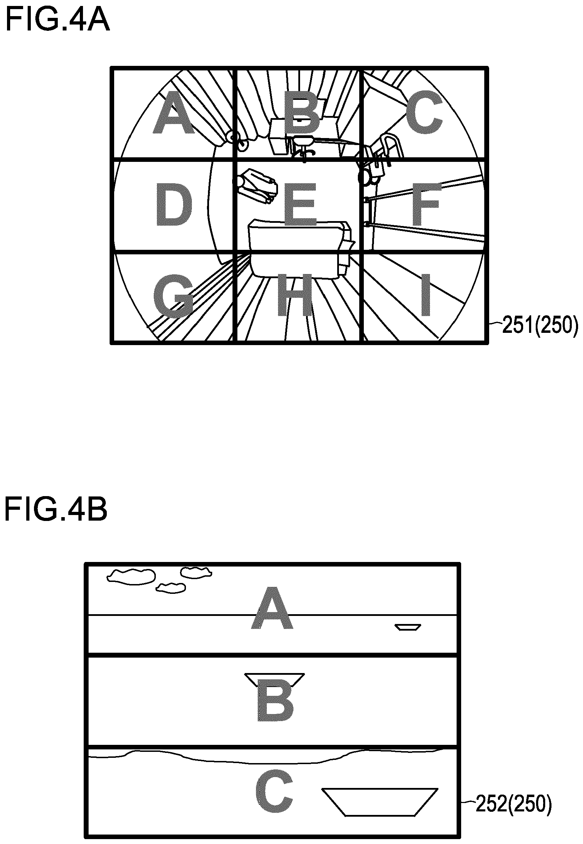

Figs. 4A and 4B illustrate examples of divisional areas. Fig. 4A illustrates an example of the divisional areas set in the wide-angle image 251. Fig. 4B illustrates an example of the divisional areas set in the wide-range photographed image 252.

In the example in Fig. 4A, there are provided one rectangular divisional area set at the center of the wide-angle image 251 (an area denoted by gray "E") and eight rectangular divisional areas set around the one rectangular divisional area (areas denoted by gray "A" to "D" and "F" to "I"). More specifically, divisional areas are set such that they are classified into an area with relatively small distortion and an area with relatively large distortion in the wide-angle image 251. In the present embodiment, for each of the divisional areas, its corresponding area-by-area estimation parameter is used. As a result of this, different area-by-area estimation parameters are used for an area with relatively slight distortion and for an area with relatively serious distortion in the wide-angle image 251, respectively.

In the example in Fig. 4B, there are provided the divisional area set in an upper portion of the wide-range photographed image 252 (an area denoted by gray "A"), the divisional area set in a middle portion (an area denoted by gray "B"), and the divisional area set in a lower portion (an area denoted by gray "C"). More specifically, the divisional areas are set such that they are classified into the upper portion of the wide-range photographed image 252 where the ratio between the size of the object on the wide-range photographed image 252 and the actual size of the object is high, the lower portion of the wide-range photographed image 252 where the above-stated ratio is low, and the middle portion of the wide-range photographed image 252 where the above-stated ratio is middle between those in the upper and lower portions. Thus, different area-by-area parameters are used depending on the ratio between the size of the object on the wide-range photographed image 252 and the actual size of the object.

The display unit 130 is a liquid-crystal display, for example, and displays various kinds of information

The input unit 140 includes a touch panel or various kinds of keys, for example. The input unit 140 is used for various kinds of operations and inputting.

The communication unit 150 is an interface for communicating with external apparatuses. For communication, a network interface complying with standards such as Ethernet (registered trademark), SATA, PCI, Express, USB, or IEEE 1394 can be used. Alternatively, for communication, a wireless communication interface complying with standards such as Bluetooth (registered trademark), IEEE 802.11, or 4G can be used. The communication unit 150 receives the photographed image 250 from the photographing apparatus 200. The communication unit 150 transmits the notice of event to the mobile terminal 400. The communication unit 150 transmits the detection result of the target person 500 detected from the photographed image 250, to the mobile terminal 400. Further, the communication unit 150 can transmit the detection results of posture and behavior of the target person 500 to the mobile terminal 400.

Details of functions of the control unit 110 will be given.

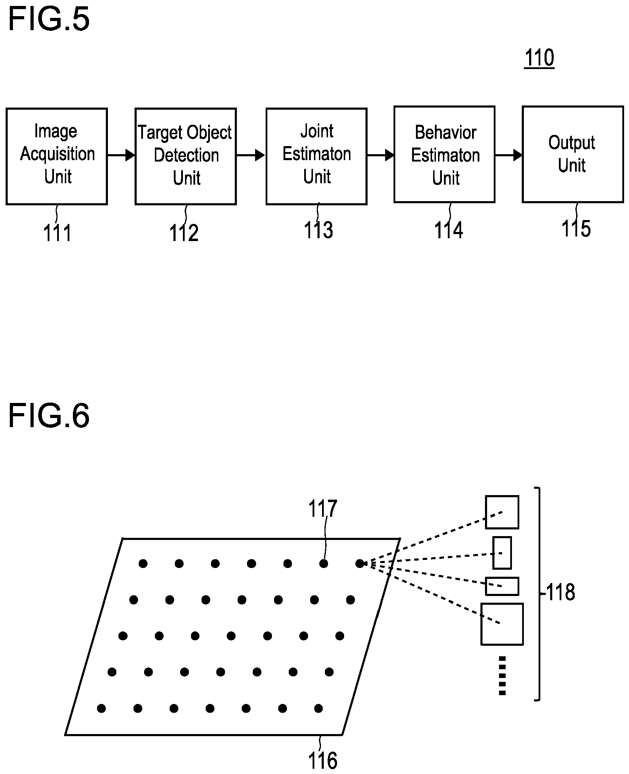

Fig. 5 is a block diagram illustrating functions of the control unit of the target object detection apparatus. The control unit 110 includes an image acquisition unit 111, a target object detection unit 112, a joint estimation unit 113, a behavior estimation unit 114, and an output unit 115. The image acquisition unit 111 forms an acquisition unit. The target object detection unit 112 forms a feature-map generation unit, a detection unit, an object detector, and a target object detector.

The image acquisition unit 111 acquires the photographed image 250 received from the photographing apparatus 200 via the communication unit 150.

The target object detection unit 112 detects the target person 500 from the photographed image 250 in the following manner. A convolution operation of the photographed image 250 by the DNN is performed, to generate a feature map in which features of pixels are extracted. Area-by-area estimation parameters are read out from the storage unit 120. In each of divisional areas being set, the target person 500 is detected from the feature map by using the DNN in which the dictionary corresponding to the divisional area is reflected. More specifically, in each of divisional areas, an area where an object is present on the photographed image 250 is detected from the feature map as the candidate rectangle 253 by using the DNN, and the category of the object included in the candidate rectangle 253 is estimated. Then, the candidate rectangle 253 including the object of which category has been estimated to be a person is detected as the output rectangle 254 including the target person 500. Below, a method of detecting the candidate rectangle 253 and the output rectangle 254 from the feature map will be described in detail.

Fig. 6 is an explanatory view for explaining a method of detecting the candidate rectangle based on the feature map. Fig. 7 is an explanatory view for explaining an example of the candidate rectangle.

In Fig. 6, a part corresponding to the divisional area in the feature map 116 is illustrated as the feature map 116. In the feature map 116, grids 117 are set as local areas. Each of the grids 117 is brought into correspondence to anchors 118 that are reference rectangles on the photographed image 250. Each of the grids 117 is brought into correspondence to a plurality of anchors 118, each of which having a predetermined shape. The shapes of the plurality of anchors 118 may differ from local area to local area. A probability of presence of the object in each of the anchors 118 is estimated by the DNN in which the dictionary corresponding to the divisional area is reflected, and one of the anchors 118 that has the highest probability of presence of the object therein is determined. An amount of positional shift and an amount of scale shift of the determined anchor 118 with respect to a rectangular area where the object is present, are estimated. Then, those amounts of shift are minimized to detect the candidate rectangle 253.

In the example in Fig. 7, the candidate rectangles 253 including objects, i.e., a person, a bed, a desk, a chair, a walker, a television, a fan, and the like, respectively, are shown. Additionally, some objects (for example, moving objects such as animals) may be detected as the candidate rectangles 253.

The target object detection unit 112 calculates respective reliability scores of predetermined categories in each of the candidate rectangles 253 having been detected. The reliability score is a likelihood of each predetermined category. Predetermined categories are set to any categories including the person that is the category of the target person 500. Predetermined categories can be a person, a chair, a desk, and an instrumental, for example. The target object detection unit 112 detects the candidate rectangle 253 in which the category having the highest reliability score is the person, as the output rectangle 254.

The target object detection unit 112 outputs the detected output rectangle 254 together with the calculated reliability scores of categories.

Fig. 8 is a view illustrating an example of the output rectangle 254 output as the detection result of the target person.

In the example in Fig. 8, the detection result of the target person 500 in the wide-angle image 251 is shown. The output rectangle 254 output as the detection result is accompanied with a note indicating respective reliability scores of predetermined categories. The reliability score of a person category is 0.9, the reliability score of an instrument category is 0.1, and the reliability score of each of the other categories is 0. Thus, it is found that the target person 500 is detected because the candidate rectangle 253 in which the reliability score of the person category is the highest has been detected as the output rectangle 254. Additionally, in the present embodiment, only the target person 500 is defined as the target object as described above, and thus any of the candidate rectangles 253 in which the reliability score of the category other than a "person" is the highest is not detected as the output rectangle 254.

In the present embodiment, in each of the divisional areas resulting from division of the photographed image 250, the target person 500 is detected from the feature map 116 generated from the photographed image 250 by using the dictionary corresponding to the divisional area. This can reduce false detection of the object due to variation in the object with areas in the photographed image 250. In contrast, in a case where the target person 500 is detected from the feature map 116 by using the same dictionary in all of areas in the photographed image 250, false detection of the object due to variation in the object with areas in the photographed image 250 can occur. More specifically, when an image of a walker varies due to distortion in the photographed image 250, for example, the reliability score of the person in the candidate rectangle 253 including the walker is increased relative to reliability scores of the other categories, which can cause the walker to be falsely detected as the person.

Further, in the present embodiment, the feature map 116 is generated from the whole of the photographed image 250, and the feature map 116 for each of divisional areas is not generated. In other words, the single feature map 116 is shared in respective processes of detecting the target person 500 from the divisional areas, and the feature map 116 for each of divisional areas is not generated. This allows the target person 500 to be detected at a high speed and with high accuracy.

The joint estimation unit 113 estimates the joints 119 as a posture of the target person 500, based on the output rectangle 254, and outputs the estimated joints 119 to the behavior estimation unit 114 as a detection result of the joints 119. The joint estimation unit 113 can estimate the joints 119 based on the output rectangle 254 by a known method using a DNN.

Fig. 9 is an explanatory view illustrating an example of estimated joints. The joints 119 are shown while being superposed on the photographed image 250 and the positions of the joints 119 are indicated by outlined circles. The joints 119 include the joints 119 of a head, a neck, shoulders, elbows, hands, a waist, thighs, knees, and feet, for example. In the example in Fig. 9, it can be recognized that the target person 500 is in a sitting posture, from positional relationships among the joints 119.

The behavior estimation unit 114 estimates the behavior of the target person 500 based on the joints 119 estimated by the joint estimation unit 113 and outputs the estimated behavior to the output unit 115, as a detection result of behavior of the target person 500. The behavior estimation unit 114 can estimate the behavior of the target person 500 based on time variation in the joints 119 estimated from the plurality of photographed images 250. For example, in a case where an average speed of each of the joints 119 is rapidly reduced and a posture recognized from the joints 119 after the reduction of the average speed is decubitus, the behavior estimation unit 114 can estimate the behavior of the target person 500 to be "falling".

The output unit 115 outputs the output rectangle 254 that is detected by the target object detection unit 112, the joints 119 of the target person 500 that are detected by the joint estimation unit 113, and the behavior of the target person 500 that is detected by the behavior estimation unit 114.

Operations of the target object detection apparatus 100 will be described.

Fig. 10 is a flowchart illustrating operations of the target object detection apparatus 100. Steps in the flowchart are preformed by the control unit 110 in accordance with a program stored in the storage unit 120.

The control unit 110 causes the storage unit 120 to store area estimation parameters (S101).

The control unit 110 acquires the photographed image 250 from the photographing apparatus 200 via the communication unit 150 (S102).

The control unit 110 generates the feature map from the photographed image 250 by using the DNN (S103).

The control unit 110 switches the area-by-area estimation parameters used for detecting the target person 500 by selection.

In a case where the photographing apparatus 200 is the wide-angle camera, the control unit 110 can select area-by-area parameters based on the distortion characteristics of the wide-angle camera. The distortion characteristics of the wide-angel camera are identified by the model number of the wide-angle camera. Thus, for example, for each wide-angel camera, area-by-area parameters to which the divisional areas are set in accordance with the distortion characteristics of the wide-angle camera, are previously stored in the storage unit 120 so as to correspond to the model number of the wide-angle camera,. The control unit 110 can select area-by-area parameters correspond to the model number of the wide-angle camera that are included in data of the photographed image 250 acquired from the wide-angle camera. The control unit 110 may cause the display unit 130 to display a screen that accepts inputting of distortion characteristics of a wide-angle camera of the photographing apparatus 200, to select area-by-area parameters to which the divisional areas are set in accordance with the distortion characteristics, based on the distortion characteristics input by a user in the input unit 140. The control unit 110 may select area-by-area parameters based on an installation height of the wide-angle camera of the photographing apparatus 200. For example, for each installation height of the wide-angle camera, area-by-area parameters to which the divisional areas are set in accordance with the installation height are previously stored in the storage unit 120 so as to correspond to the installation height in the storage unit 120. CAD (Computer-Aided Design) data of a facility is previously stored. By using a room number or the like of a room where the wide-angle camera is installed, the room number being included in data of the photographed image 250 acquired from the wide-angle camera, and based on the CAD data of the facility, the control unit 110 calculates the height of a ceiling on which the wide-angle camera is installed in the room. Then, the control unit 110 can acquire area-by-area parameters to which the divisional areas are set in accordance with the installation height equal to the calculated height. The control unit 110 may cause the display unit 130 to display a screen that accepts inputting of an installation height of the wide-angle camera of the photographing apparatus 200, to select area-by-area parameters to which the divisional areas are set in accordance with the installation height, based on the installation height input by the user in the input unit 140.

In a case where the photographing apparatus 200 is the wide-range photographing camera, the control unit 110 can select area-by-area parameters based on an extent of a photographing range of the photographing apparatus 200. For example, for each extent of the photographing range of the wide-range photographed image 252, area-by-area parameters to which the divisional areas are set in accordance with the extent of the photographing range are previously stored in the storage unit 120 so as to correspond to the extent of the photographing range. The control unit 110 can cause the display unit 130 to display a screen that accepts inputting of the extent of the photographing range (a photographing area or an angle of view, for example) of the wide-range photographing camera of the photographing apparatus 200, to select area-by-area parameters to which the divisional areas are set in accordance with the extent of the photographing range, based on the extent of the photographing range input by the user in the input unit 140. The control unit 110 may select area-by-area parameters based on the installation height of the wide-range photographing camera of the photographing apparatus 200. For example, for each installation height of the wide-range photographing camera, area-by-area parameters to which the divisional areas are set in accordance with the installation height are previously stored in the storage unit 120 so as to correspond to the installation height. The CAD data of the facility is previously stored in the storage unit 120. By using a room number or the like of a room where the wide-range photographing camera is installed, the room number being included in data the wide-range photographed image 252 acquired from the wide-range photographing camera, and based on the CAD data of the facility, the control unit 110 calculates the height of a ceiling on which the wide-range photographing camera is installed in the room. Then, the control unit 110 can acquire area-by-area parameters to which the divisional areas are set in accordance with the installation height equal to the calculated height. The control unit 110 may cause the display unit 130 to display a screen that accepts inputting of the installation height of the wide-range photographing camera of the photographing apparatus 200, to select area-by-area parameters to which the divisional areas are set in accordance with the installation height, based on the installation height input by a user in the input unit 140.

The control unit 110 detects the candidate rectangle 253 including the object from the feature map in each of divisional areas by using the dictionary corresponding to the divisional area, based on area-by-area estimation parameter (S105).

The control unit 110 calculates respective reliability scores of predetermined categories in each of the candidate rectangles 253 and detects the output rectangle 254, thereby detecting the target person 500 (S106).

The control unit 110 transmits the output rectangle 254 and the respective reliability scores of the predetermined categories in the output rectangle 254 to the mobile terminal 400 or performs the other like operations, to achieve outputting (S107).

The embodiments of the present invention have the following effects.

In each of divisional areas resulting from the division of the photographed image, the target object is detected from the feature map generated from the photographed image by using the dictionary corresponding to the divisional area. This can reduce false detection of the target object due to variation in the target object with areas in the photographed image, thereby detecting the target object at a high speed and with high accuracy.

Further, in a case where the photographed image is the wide-angle image, the divisional areas are set in accordance with the degree of distortion varying with positions on the image that is the wide-angle image. Thus, also in the case where the photographed image is the wide-angle image, it is possible to reduce false detection of the target object due to variation in the target object with the degree of distortion in each area in the photographed image, thereby detecting the target object at a high speed and with high accuracy.

Further, the photographed image is the image in which the ratio between the size of an object on the photographed image and the actual size of the object varies with the distance from the camera that photographs the image to the object in the photographing direction, and the divisional areas are set in accordance with the ratio between the size of the object on the photographed image and the actual size of the object. Thus, also in the case where the photographed image is the wide-range photographed image in which the ratio between the size of the object on the photographed image and the actual size of the object varies, it is possible to reduce false detection of the target object due to variation in the ratio between the size of the object on the photographed image and the actual size of the object in each area of the wide-range photographed image, thereby detecting the target object at a high speed and with high accuracy.

Further, based on the area-by-area estimation parameters, respective reliability scores of predetermined object categories are calculated in each of the divisional areas by using the dictionary corresponding to the divisional area, thereby detecting the target object. Thus, by detecting the target object in each of the divisional areas through calculation of reliability scores using the dictionary corresponding to the divisional area, it is possible to more effectively reduce false detection of the target object due to variation in the object with areas in the photographed image, thereby detecting the target object at a high speed and with higher accuracy.

Further, based on the area-by-area estimation parameters, the object is detected from the feature map in each of divisional areas by using the dictionary corresponding to the divisional area, and thereafter respective reliability scores of predetermined categories are calculated for each of the detected objects, thereby detecting the target object from the objects. Thus, it is possible to make a check while separating accuracy in detection of the object and accuracy in calculation of respective reliability scores of the object categories from each other, thereby detecting the target object with higher accuracy.

Further, the amount of the positional shift and the amount of scale shift of the reference rectangle set in the photographed image with respect to the rectangular area where the object is present are estimated in each of divisional areas by using the feature map and the dictionary, and the amount of positional shift and the amount of scale shift are minimized to detect the candidate rectangle 253. Then, respective reliability scores of the predetermined categories are calculated for the object included in the candidate rectangle 253, and the candidate rectangle in which the category having the highest reliability score is the category of the target object is estimated as an output rectangle including the target object, thereby detecting the target object. Moreover, the shape of the reference rectangle varies with the divisional areas. This allows a target object to be detected more simply, at a high speed and with high accuracy by using Faster R-CNN.

Further, based on the distortion characteristics of the lens of the camera photographing the wide-angle image as the photographed image, the area-by-area estimation parameters used for detecting the target object are switched to the area-by-area estimation parameters to which the divisional areas are set in accordance with the distortion characteristics of the lens. This allows the target object to be detected from the wide-angle image in a simpler procedure, at a high speed, and with high accuracy.

Further, based on the installation height of the camera photographing the wide-angle image as the photographed image, the area-by-area estimation parameters used for detecting the target object are switched to the area-by-area estimation parameters to which the divisional areas in accordance with the installation height of the camera are set. This allows the target object to be detected from the wide-angle image in a simpler procedure, at a high speed, and with high accuracy.

Further, based on an the extent of the photographing range of the wide-range photographed image, area-by-area estimation parameters used for detecting the target object are switched to the area-by-area estimation parameters to which the divisional areas in accordance with the extent of the photographing range are set. This allows the target object to be detected from the wide-range photographed image in a simpler procedure, at a high speed, and with high accuracy.

With regard to the above-described configuration of the target object detection system 10, main components have been described in an attempt to describe features of the above-described embodiment. The configuration is not limited to the above-described configuration, and various modifications are possible within the scope of the claims. Further, components included in a general target-object detection system are not excluded.

For example, either the photographing apparatus 200 including the sensor box or the mobile terminal 400 may have the functions of the target object detection apparatus 100.

Further, each of the target object detection apparatus 100, the photographing apparatus 200, and the mobile terminal 400 may include a plurality of apparatuses and the plurality of apparatuses forming any of the apparatuses 100, 200, and 400 may be configured as a single apparatus.

Further, in the above-described flowchart, a part of steps may be omitted, or another step may be added. Moreover, a part of the steps may be performed at the same time, and a single step may be divided into plural steps and performed.

Further, the target object is not limited to a person, and may be a ship, a cat, a dog, and the like. The target object may include a plurality of categories.

Further, components and the method for performing various kinds of processing in the above-described target object detection system 10 can be implemented by either a dedicated hardware circuit or a computer loaded with programs. The programs may be provided by a computer-readable recording medium such as a USB memory or a DVD (digital versatile disc)-ROM, for example, or may be provided on-line via a network such as the Internet. In this case, programs recorded on a computer-readable recording medium are typically transferred to and stored in a storage unit such as a hard disc. Moreover, the programs may be provided in the form of independent application software or may be incorporated into software of a device such as the detection unit or the like, as one of functions.

The present application is based on Japanese Patent Application filed on July 2, 2018 (No. 2018-126305), the disclosure of which is incorporated herein by reference in its entirety.

## Claims

1. A target object detection program that causes a computer to perform processing comprising:
a procedure (a) of acquiring an image that is photographed;
a procedure (b) of generating a feature map from the image acquired in the procedure (a); and
a procedure (c) of detecting a target object from the feature map in each of divisional areas by using the dictionary corresponding to the divisional area, based on area-by-area estimation parameters to which the divisional areas resulting from division of the image into a plurality of areas and dictionaries corresponding to the divisional areas respectively for detecting the target object, are set.

2. The target object detection program according to claim 1, wherein
the image is a wide-angle image, and
the divisional areas are set in accordance with a degree of distortion varying with positions on the image.

3. The target object detection program according to claim 1, wherein
the image is an image in which a ratio between a size of an object on the image and an actual size of the object varies with a distance from a camera that photographs the image to the object in a photographing direction, and
the divisional areas are set in accordance with the ratio.

4. The target object detection program according to any of claims 1 to 3, wherein in the procedure (c), based on the area-by-area estimation parameters, respective reliability scores of predetermined object categories are calculated in each of the divisional areas by using the dictionary corresponding to the divisional area, thereby detecting the target object.

5. The target object detection program according to any of claims 1 to 3, wherein the procedure (c) includes:
a procedure (c1) of, based on the area-by-area estimation parameters, detecting an object from the feature map in each of the divisional areas by using the dictionary corresponding to the divisional area; and
a procedure (c2) of calculating respective reliability scores of predetermined categories for each of the objects detected in the procedure (c1), so as to detect the target object from the objects.

6. The target object detection program according to any of claims 1 to 3, wherein
in the procedure (c), an amount of positional shift and an amount of scale shift of a reference rectangle set in the image with respect to a rectangular area where an object is present are estimated in each of the divisional areas by using the feature map and the dictionary, the amount of positional shift and the amount of scale shift are minimized to detect a candidate rectangle including the object, respective reliability scores of predetermined categories are calculated for the object included in the candidate rectangle, and the candidate rectangle in which a category having the highest reliability score is a category of the target object is output as an output rectangle including the target object, thereby detecting the target object, and
a shape of the reference rectangle varies with the divisional areas.

7. The target object detection program according to claim 2, wherein in the procedure (c), based on distortion characteristics of a lens of a camera photographing the wide-angle image, the area-by-area estimation parameters used for detecting the target object are switched to the area-by-area estimation parameters to which the divisional areas are set in accordance with the distortion characteristics of the lens.

8. The target object detection program according to claim 2, wherein in the procedure (c), based on an installation height of a camera photographing the wide-angle image, the area-by-area estimation parameters used for detecting the target object are switched to the area-by-area estimation parameters to which the divisional areas in accordance with the installation height of the camera are set.

9. The target object detection program according to claim 3, wherein in the procedure (c), based on an extent of a photographing range of the image, the area-by-area estimation parameters used for detecting the target object are switched to the area-by-area estimation parameters to which the divisional areas in accordance with the extent of the photographing range are set.

10. A target object detection apparatus comprising:
an acquisition unit configured to acquire an image that is photographed;
a feature-map generation unit configured to generate a feature map from the image that is acquired; and
a detection unit configured to detect a target object from a feature map in each of divisional areas by using the dictionary corresponding to the divisional area, based on area-by-area estimation parameters to which the divisional areas resulting from division of the image into a plurality of areas and dictionaries corresponding to the divisional areas respectively for detecting a target object are set.

11. The target object detection apparatus according to claim 10, wherein
the image is a wide-angle image, and
the divisional areas are set in accordance with a degree of distortion varying with positions on the image.

12. The target object detection apparatus according to claim 10, wherein
the image is an image in which a ratio between a size of an object on the image and an actual size of the object varies with a distance from a camera that photographs the image to the object in a photographing direction, and
the divisional areas are set in accordance with the ratio.

13. The target object detection apparatus according to any of claims 10 to 12, wherein the detection unit, based on the area-by-area estimation parameters, calculates respective reliability scores of predetermined object categories in each of the divisional areas by using the dictionary corresponding to the divisional area, thereby detecting the target object.

14. The target object detection apparatus according to any of claims 10 to 12, wherein the detection unit includes:
an object detector configured to, based on the area-by-area estimation parameters, detect an object from the feature map in each of the divisional areas by using the dictionary corresponding to the divisional area; and
a target object detector configured to calculate respective reliability scores of predetermined categories for each of the objects detected by the object detection unit, so as to detect the target object from the objects.

15. The target object detection apparatus according to any of claims 10 to 12, wherein
the detection unit estimates an amount of positional shift and an amount of scale shift of a reference rectangle set in the image with respect to a rectangular area where an object is present, in each of the divisional areas by using the feature map and the dictionary, minimizes the amount of positional shift and the amount of scale shift to detect a candidate rectangle including the object, calculates respective reliability scores of predetermined categories for the object included in the candidate rectangle, and outputs the candidate rectangle in which a category having the highest reliability score is a category of the target object as an output rectangle including the target object, thereby detecting the target object, and
a shape of the reference rectangle varies with the divisional areas.

16. The target object detection apparatus according to claim 11, wherein the detection unit, based on distortion characteristics of a lens of a camera photographing the wide-angle image, switches the area-by-area estimation parameters used for detecting the target object to the area-by-area estimation parameters to which the divisional areas are set in accordance with the distortion characteristics of the lens.

17. The target object detection apparatus according to claim 11, wherein the detection unit, based on an installation height of a camera photographing the wide-angle image, switches the area-by-area estimation parameters used for detecting the target object to the area-by-area estimation parameters to which the divisional areas in accordance with the installation height of the camera are set.

18. The target object detection apparatus according to claim 12, wherein the detection unit, based on an extent of a photographing range of the image, switches the area-by-area estimation parameters used for detecting the target object to the area-by-area estimation parameters to which the divisional areas in accordance with the extent of the photographing range are set.
